# EUROPEAN PATENT APPLICATION

(11) **EP 1 607 861 A2**
(43) Date of publication of application: **21.12.2005**
(21) Application number: 05104251.3
(22) Date of filing: 19.05.2005
(51) Int. Cl.: G06F 9/445

(54) **Method and apparatus for deploying software applications using a zone architecture**

(30) Priority: 19.05.2004 US 848731
(71) Applicant: SUN MICROSYSTEMS, INC., Santa Clara, California 95054 (US)
(72) Inventor: Pronk van Hoogeveen, Joost W.D, Mountain View, CA 94043 (US); Rehhausser, Frederick V., Los Gatos, CA 95030 (US)
(74) Representative: Brochard, Pascale

(57) **Abstract**

A method for installing an application, including creating a zone, installing the application in the zone to obtain a remote zone, packaging the remote zone to obtain an application zone package, and deploying the application zone package in a target global zone.

## Description

### Background

Modem computer systems, unlike their earlier predecessors, require sophisticated operating systems to function. These modem operating systems include functionality to manage system resources, manage interaction between the computer system and remote computer systems, and execute applications. As computers evolved to include more functionality and perform tasks at faster speeds, applications executing on these computers were designed to have more functionality and, as a result, became more complex.

The complexity of the applications is typically a result of the interactions between various components of the application with the underlying operating system, as well as the interactions between the multiple applications executing on the same computer. As a result, installing new applications on a computer typically requires a thorough understanding of the current configuration of the computer system as well as an understanding of how the application will interact with the computer system (and the applications currently executing on the computer system).

Due to number of different system configurations upon which a given application may be installed, many software application venders typically create a generic installation package (or set of packages) that may be used to install the application. System administrators typically use the generic installation packages, along with their understanding of the system, to install the application.

### Summary

In general, in one aspect, the invention relates to a method for installing an application, comprising creating a zone, installing the application in the zone to obtain a remote zone, packaging the remote zone to obtain an application zone package, and deploying the application zone package in a target global zone.

In general, in one aspect, the invention relates to a method for installing an application, comprising accessing a target global zone, configuring a target non-global zone based on the target global zone, installing the target non-global zone, unpacking an application zone package to obtain the application and a configuration script, and installing the application in the target non-global zone using the configuration script.

In general, in one aspect, the invention relates to a system comprising a target global zone, and an application zone package comprising a remote zone and a configuration script, wherein the configuration script is configured to load the remote zone in the target global zone, wherein the remote zone comprises an installed application.

In general, in one aspect, the invention relates to a system comprising a target global zone, and an application zone package comprising a configuration script and an application wherein the configuration script is configured to create a target non-global zone in the target global zone, configure the target non-global zone, install the target non-global zone, install the application in the target non-global zone, and configure the application within the target non-global zone.

In general, in one aspect, the invention relates to a computer system for installing an application, comprising a processor, a memory, a storage device, and software instructions stored in the memory for enabling the computer system under control of the processor, to create a remote zone, install the application in the remote zone to obtain a remote zone, package the remote zone to obtain an application zone package, and deploy the application zone package in a target global zone.

In general, in one aspect, the invention relates to a computer system for installing an application, comprising a processor, a memory, a storage device, and software instructions stored in the memory for enabling the computer system under control of the processor, to create a remote zone, install the application in the remote zone to obtain a remote zone, package the remote zone to obtain an application zone package, and deploy the application zone package in a target global zone.

Other aspects of the invention will be apparent from the following description and the appended claims.

### Brief Description of Drawings

Figure 1 shows a block diagram of a zone architecture in accordance with one embodiment of the invention.

Figure 2 shows a flow chart in accordance with one embodiment of the invention.

Figure 3 shows a flow diagram of a zone architecture in accordance with one embodiment of the invention.

Figure 4 shows a computer system in accordance with one embodiment of the invention.

### Detailed Description

Specific embodiments of the invention will now be described in detail with reference to the accompanying figures. Like elements in the various figures are denoted by like reference numerals for consistency.

In the following detailed description of embodiments of the invention, numerous specific details are set forth in order to provide a more thorough understanding of the invention. However, it will be apparent to one of ordinary skill in the art that the invention may be practiced without these specific details. In other instances, well-known features have not been described in detail to avoid obscuring the invention.

In general, the invention relates to a method and apparatus for installing an application on a system. More specifically, embodiments of the invention relate a method and apparatus for installing the application using a zone architecture. Further, embodiments of the invention relate to installing an application into a remote zone. The remote zone may subsequently be deployed on a target system. By using a zone architecture, embodiments of the invention enable a software application vendor to install and configure the application in a non-global zone and provide the non-global zone to a consumer. Due to the nature of the zone architecture, the consumer may subsequently deploy the non-global zone on a target system. In this manner, the consumer may easily install an application on a target system with minimal downtime or concerns that the installed application will interfere with other applications currently executing on the target system.

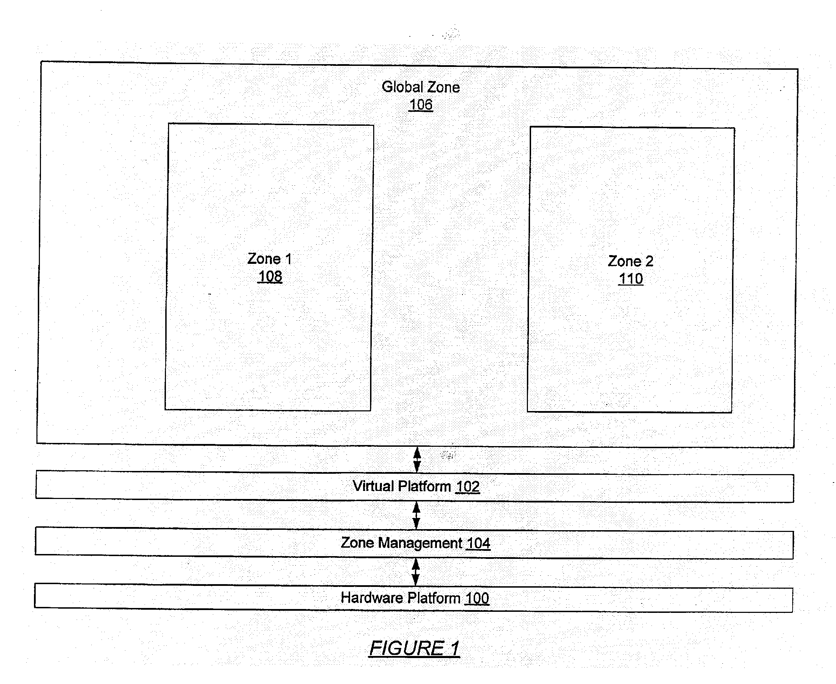

Figure 1 shows a block diagram for a system having a zone architecture in accordance with one embodiment of the invention. The system includes a real platform (100). The real platform (100) may include one or more of the following components (not shown): physical resources (*i.e.*, network interfaces, network devices, interfaces to data repositories, etc.) of the system, core operating system services, remote administering monitoring services, platform administrative services, etc. The real platform (100) interfaces with the virtual platform (102), via a zone management layer (104). The zone management layer (104) typically includes functionality to administer one or more zones (*e.g.*, a global zone (106), zone 1 (108), zone 2 (110), etc.).

The virtual platform (102) typically includes a set of services and resources that allow full functionality of the zone architecture. For example, the virtual platform (102) may include network interfaces, devices, administration utilities, etc. The virtual platform (102) may interface with one or more zones (*e.g.*, a global zone (106), zone 1 (108), zone 2 (110)).

In one or more embodiments of the invention, each non-global zone (*i.e.*, zone 1 (108) and zone 2 (110)) provides an isolated environment for running applications. Processes running in a given zone are prevented from monitoring or interfering with other activities in the system. Access to other processes, network interfaces, file systems, devices, and inter-process communication facilities is restricted to prevent interaction between processes in different zones. The privileges available within a zone are restricted to prevent operations with system-wide impact. In one embodiment of the invention, each zone (zone 1 (108) and zone 2 (110)) may be identified by an alphanumeric name and a numeric ID.

The zones (zone 1 (108) and zone 2 (110)) are typically configured and administered using the utilities provided by the zone management (104) layer. These utilities may allow an administrator to specify the configuration details of a zone, install file system contents (including software packages) into the zone, manage the runtime state of the zone, etc. In addition, a pseudo-terminal utility may allow an administrator to run commands within an active zone, without logging into the zone through a network-based login server, such as rlogind or sshd.

Enclosing the previously mentioned zones (zone 1 (108) and zone 2 (110)) is a global zone (106). The global zone (106) always exists, and acts as the "default" zone in which all processes run if no zones have been created. Further, in one or more embodiments of the invention, the global zone (106) is the general operating environment (OS) that is created when the OS is booted and executed, and serves as the default zone in which processes may be executed if no non-global zones (*i.e.*, zone 1 (108) and zone 2 (110)) are created/present. In the global zone (106), administrators and/or processes having the proper rights and privileges may perform generally any task and access any device/resource that is available on the computer system on which the OS is run. Thus, processes running in the global zone (106) typically have the same set of privileges available on a system running without zones, *i.e.*, privileges to load kernel modules, access physical devices, etc. Further, an administrator logged into the global zone (106) may monitor and control the system as a whole (including the physical devices and network interfaces that are hidden from the other non-global zones).

The zone architecture shown in Figure 1 allows the physical system to be separated into isolated individual portions. Having non-global zones that are isolated from each other may be desirable in many instances. For example, if a single computer system running a single instance of an OS is to be used to host applications for different competitors (*e.g.*, competing websites), then it would be desirable to isolate the data and processes of one competitor from the data and processes of another competitor. That way, it can be ensured that information will not be leaked between the competitors. Partitioning the OS into non-global zones and hosting the applications of the competitors in separate non-global zones is one possible way of achieving this isolation.

The ability to partition the OS into non-global zones and host applications in separate non-global zones may also be leveraged to provide a method to rapidly deploy an application. More specifically, in one embodiment of the invention, the application may be initially configured in a remote non-global zone residing in a remote global zone (for example in a global zone of a independent software vendor (ISV)). Using the isolating properties inherent in the zone architecture, the remote non-global zone may be deployed in a target global zone (for example in a global zone executing on a client computer) without affecting any other applications executing in the various other non-global zones or in the global zone. In particular, because the non-global zone in which the application is deployed in is isolated at the operating system level from the global zone and other non-global zones, the non-global zone may be configured to execute the application without requiring the system administrator to consider hardware and software conflicts that arise on systems without a zone architecture.

As a result, the ISV may create "pre-configured" zones that may be deployed on target system. This approach is analogous to pre-configuring a network hardware appliance (*e.g.*, a Cobalt Qube marketed by Cobalt Networks). Thus, the remote zone contains the installed application and is pre-configured to execute the application. The ISV's and the consumers (i.e., the users of the target system) do not need to be concerned about conflicts between the application installed in the remote zone and the other applications executing on the target system because the remote zone provides an isolated environment in which to execute the application.

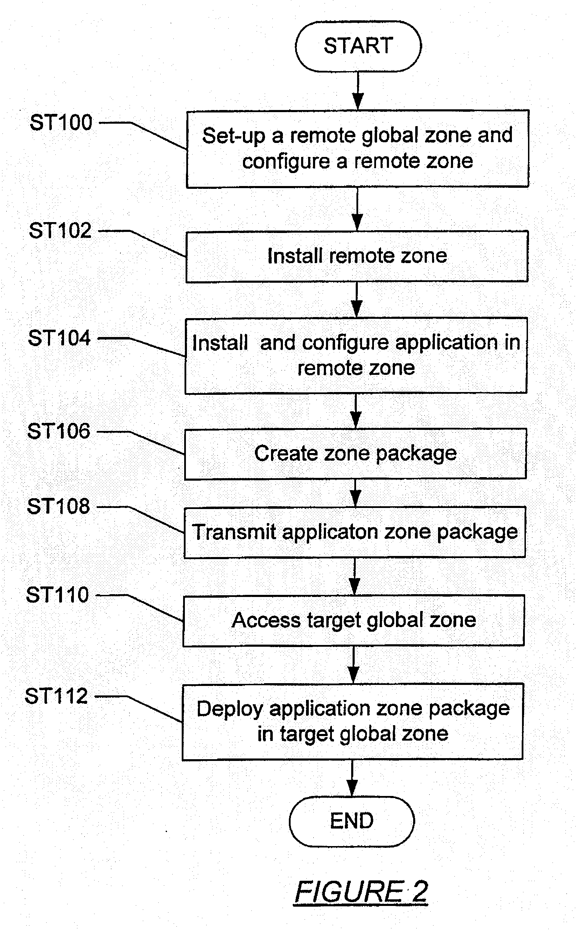

Figure 2 shows a method for deploying an application in a zone architecture in accordance with one embodiment of the invention. Initially, a remote global zone is set up and a remote zone (*i.e.*, a non-global) is configured on a remote system (ST100). Those skilled in the art will appreciate that the remote system is physically separated from a target system (*i.e.*, the system on which the application is to be deployed). Note that a while the remote system is physically separated from the target system, the remote system and the target system may be connected via a network cable, a network, etc. Further, in a distributed system, the remote system may correspond to a first node in the distributed system, while the target system may correspond to a second node in the distributed system.

Continuing with the discussion of Figure 2, the remote zone is subsequently installed in the remote global zone (ST102). After the remote zone has been installed, the application is installed and configured in the remote zone (ST104). The installation typically includes creating the necessary installation directories in the remote zone, and then loading the application into appropriate installation directories. Once the application has been installed, the application and remote zone are configured. The configuration may include setting one or more configuration parameters, for example, setting up user accounts and access permissions for the application, specifying a network port for the application to listen on, specifying file locations that the application is required to query during execution, specifying a name for the remote zone that may be used to reference the remote zone across the network, setting specifying memory parameters (such as file system names) for the remote zone, etc. At this stage the application is configured to execute in the remote zone.

The remote zone, including the installed and configured application, is subsequently used to create an application zone package (ST106). In one embodiment of the invention, the application zone package includes a copy of the remote zone (*e.g.*, for example a flash copy) in a format that is easily transferred to a target zone. In another embodiment of the invention, the application zone package also includes a configuration script. The configuration script includes functionality to deploy the copy of the remote zone in a target global zone. Alternatively, the application zone package includes a copy of the remote zone (including the installed and configured application) in a self-extracting format.

Regardless of the composition of the application zone package created in ST106, the application zone package is subsequently transmitted to a target system (*i.e*., the system upon which the application zone package is to be deployed) (ST108). The target global zone is subsequently accessed (ST110). Access to the target global zone is used to gain global zone privileges, typically the same as administrator privileges, which are required to load applications. The application zone package is subsequently deployed in the target global zone (ST112).

Depending on the contents of the application zone package, the steps involved in deploying the application zone package may vary. However, regardless of the contents of the application zone package, the result of deploying the application zone package is that the application is deployed in a newly created non-global zone within the target global zone. Further, at the end of the deployment process, the application and non-global zone in which the application is executing are completely configured to execute application on the target system. Typically, the deployment is performed using an automated processes with little or no user input. Specifically, in one embodiment of the invention, the user only has to input a network name for the newly created non-global zone (*i.e.*, a name that may be used to access the newly created non-global zone across a network).

In one embodiment, if the application zone package includes a copy of the remote zone (including the installed and configured application) and a configuration script, then steps to deploy the application zone package may be as follows. After the gaining access to the target global zone, the user may execute the configuration script. In one embodiment of the invention, the configuration script is used to link the remote zone to the target global zone such that the target global zone recognizes the remote zone as a target non-global zone. Once the remote zone has been linked to the target global zone, the configuration script may then proceed to configure the remote zone running in the target global zone to interact with the hardware (*i.e.*, specify a name such that the remote zone may be accessible via a network, etc.). Those skilled in the art will appreciate that in the aforementioned embodiment the "linked remote zone" corresponds to the newly created non-global zone from the perspective of the target system.

Alternatively, the configuration script may include functionality to configure and install a generic non-global zone in the target global zone. Once the generic non-global zone has been created, the configuration script overwrites (*i.e.*, copy into the same file space) the generic non-global zone with the copy of the remote zone (which includes the configured application). Once the remote zone has been copied over the generic non-global zone, the configuration script may then proceed to configure the remote zone running in the target global zone to interact with the hardware (*i.e.*, specify a name such that the remote zone may be accessible via a network, etc.). Those skilled in the art will appreciate that in the aforementioned embodiment the "copied remote zone" corresponds to the newly created non-global zone from the perspective of the target system.

Alternatively, in one embodiment of the invention, the application zone package only includes a configuration script and the binary of the application. In this embodiment, the configuration script includes functionality to configure and install a non-global zone in the target global zone. Once the non-global zone has been created, the configuration script proceeds to install the application in the newly created non-global zone and configure the non-global zone and application accordingly.

Those skilled in the art will appreciate that regardless of the method used to deploy the application zone package on the target system, the user (or a process controlled by the user) may be required to associate the newly created non-global zone in the target system with the underlying hardware (*i.e.*, the network hardware, etc.) Thus, the user (or a process controlled by the user) may specify the internet protocol (IP) address of the newly created non-global target zone. Alternatively, if the network supports dynamic host configuration protocol (DHCP), then the newly created non-global target zone may be able to query the DHCP service to obtain an IP address as opposed to requiring user input.

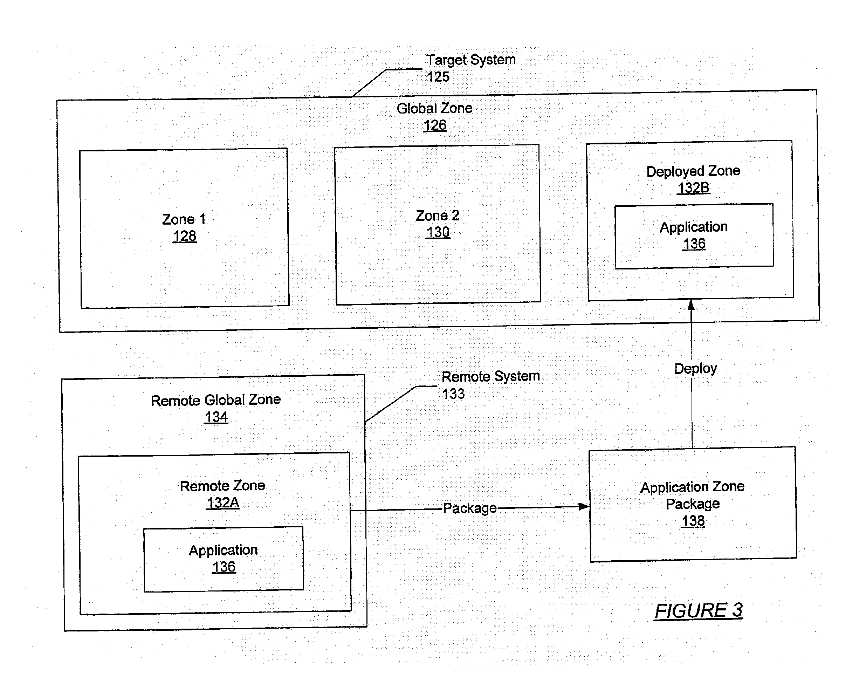

Figure 3 shows a flow diagram for deploying an application in accordance with one embodiment of the invention. In this particular example, the application (136) is initially installed and configured in remote zone (132A) that resides in remote global zone (134) executing on a remote system (133). Those skilled in the art will appreciate that the remote zone (132A) may also be configured to execute the application (136). Once the application (136) has been installed and configured in remote global zone (134) and remote zone (132A) has been configured to execute the application (136), the remote zone (132A) is packaged to produce an application zone package (138).

In one embodiment of the invention, the application zone package (138) includes a copy of the remote zone (132A). Further, the application zone package may also include a configuration script. The contents of the application zone package may be stored in a compressed format or in other formats that are suitable for transmission to a target system (125). Further, the application zone package (138) may also be stored as a self-extracting file. Those skilled in the art will appreciate that the application zone package may be transmitted to a client/consumer via the Internet (or other type of network) or via a computer readable medium such as a compact disk, flash drive, etc.

Once the application zone package (138) has been transmitted to the target system (125), the application zone package (138) is deployed. In this particular example, the target system (125) upon which the application zone package (138) is deployed includes a global zone (126). Further, the global zone (126) includes two non-global zones (zone 1 (128) and zone 2 (130)). As noted above, the application zone package may be deployed in a variety of ways, however, the result of deploy (regardless of the method used) is the same. Specifically, the deployment of the application zone package (138) in the target global zone (126) results in the creation of a new zone (i.e., deployed zone 132B) containing an installed and configured application (136).

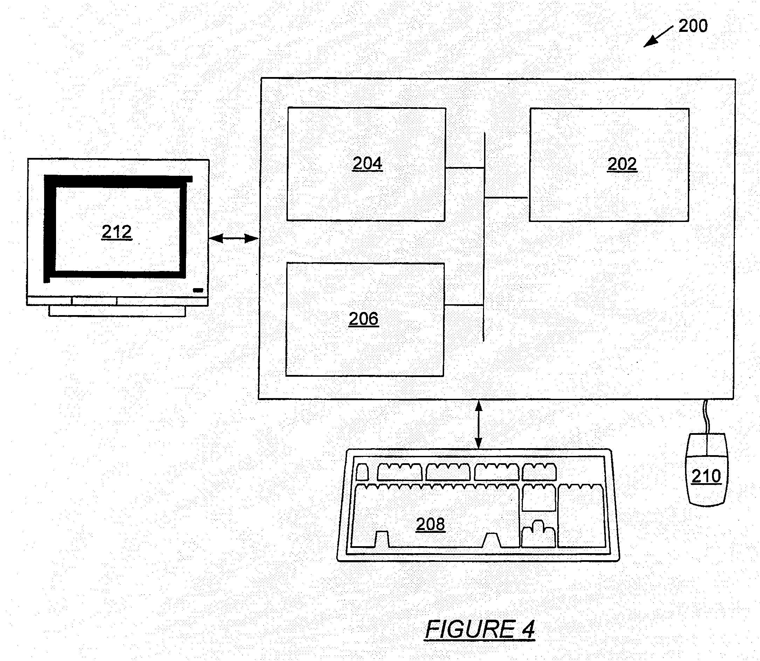

The invention may be implemented on virtually any type of computer regardless of the platform being used. For example, as shown in Figure 4, a computer system (200) includes a processor (202), associated memory (204), a storage device (206), and numerous other elements and functionalities typical of today's computers (not shown). The computer (200) may also include input means, such as a keyboard (208) and a mouse (210), and output means, such as a monitor (212). The computer system (200) is connected to a local area network (LAN) or a wide area network (*e.g*., the Internet) (not shown) via a network interface connection (not shown). Those skilled in the art will appreciate that these input and output means may take other forms.

Further, those skilled in the art will appreciate that one or more elements of the aforementioned computer (200) may be located at a remote location and connected to the other elements over a network. Further, the invention may be implemented on a distributed system having a plurality of nodes, where each portion of the invention (*e.g.*, the target system, the remote system, etc.) may be located on a different node within the distributed system. In one embodiment of the invention, the node corresponds to a computer system. Alternatively, the node may correspond to a processor with associated physical memory.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A method for installing an application, comprising:
creating a zone;
installing the application in the zone to obtain a remote zone;
packaging the remote zone to obtain an application zone package; and
deploying the application zone package in a target global zone.

2. The method of claim 1, wherein installing the application in the zone comprises:
determining at least one application configuration parameter for the application; and
configuring the remote zone using the at least one application configuration parameter.

3. The method of claim 2, wherein the at least one configuration parameter comprises a network port.

4. The method of claim 2, wherein the at least one configuration parameter comprises a memory parameter.

5. The method of claim 2, wherein the at least one configuration parameter comprises a user account.

6. The method of claim 1, wherein packaging the remote zone comprises:
copying the remote zone to obtain a copy of the remote zone; and
converting the copy of the remote zone into the application zone package.

7. The method of claim 6, wherein the application zone package is a self-extracting file.

8. The method of claim 6, wherein the application zone package comprises a configuration script.

9. The method of claim 1, wherein deploying the application zone package comprises:
accessing the target global zone;
configuring a target non-global zone;
installing the target non-global zone;
unpacking the application zone package to obtain the remote zone; and
copying a copy of the remote zone into a file space occupied by the target non-global zone.

10. The method of claim 9, further comprising:
associating the copy of the remote zone in the target global zone with hardware upon which the target global zone is executing.

11. The method of claim 10, wherein associating the remote zone in the target global zone with the hardware comprises specifying an internet protocol address.

12. The method of claim 1, wherein the remote zone is located in a remote global zone.

13. A method for installing an application, comprising:
accessing a target global zone;
configuring a target non-global zone based on the target global zone;
installing the target non-global zone;
unpacking an application zone package to obtain the application and a configuration script; and
installing the application in the target non-global zone using the configuration script.

14. A system comprising:
a target global zone; and
an application zone package comprising a remote zone and a configuration script,
wherein the configuration script is configured to load the remote zone in the target global zone,
wherein the remote zone comprises an installed application.

15. The system of claim 14, further comprising:
a target non-global zone located in the target global zone, wherein the configuration script is configured to copy a remote zone into a file space occupied by the target non-global zone.

16. The system of claim 14, wherein the application zone package is a self-extracting file.

17. A system comprising:
a target global zone; and
an application zone package comprising a configuration script and an application;
wherein the configuration script is configured to:
create a target non-global zone in the target global zone,
configure the target non-global zone,
install the target non-global zone,
install the application in the target non-global zone, and
configure the application within the target non-global zone.

18. A computer system for installing an application, comprising:
a processor;
a memory;
a storage device; and
software instructions stored in the memory for enabling the computer system under control of the processor, to:
create a remote zone;
install the application in the remote zone to obtain a remote zone;
package the remote zone to obtain an application zone package; and
deploy the application zone package in a target global zone.
